# EUROPÄISCHE PATENTANMELDUNG

(11) **EP 3 064 283 A2**
(43) Veröffentlichungstag der Anmeldung: **07.09.2016**
(21) Anmeldenummer: 16000314.1
(22) Anmeldetag: 09.02.2016
(51) Int. Cl.: B07B 1/14, B07B 1/15

(54) **WALZENSEGMENT FÜR TRENN- UND REINIGUNGSVORRICHTUNGEN IN HACKFRUCHTERNTERN UND VERFAHREN ZU DESSEN HERSTELLUNG**

(30) Priorität: 10.02.2015 DE 102015101900
(71) Anmelder: Grimme Landmaschinenfabrik GmbH & Co. KG, 49401 Damme (DE)
(72) Erfinder: Broermann, Mike, 49401 Damme (DE); Dettmer, Franz-Josef, 49577 Ankum (DE); Tepe, Richard, 49401 Damme (DE)
(74) Vertreter: Pott, Ulrich

(57) **Zusammenfassung**

Eine Trenn- und Reinigungsvorrichtung für einen Hackfruchternter o. dgl. Sortier- und Reinigungsanlagen der Landtechnik sieht vor, dass dabei zumindest eine Trenn- und Reinigungsstrecke definiert ist. In deren Bereich ist zumindest eine aus einem oder mehreren in Richtung einer Walzenlängsachse koaxial aneinandergrenzenden Walzensegment(en) zusammengesetzte Walze angeordnet ist. Diese Walzensegmente weisen einen aus elastisch nachgiebigem Material bestehenden sowie mit nach außen vorstehende Mitnahmerippen geformten Mantelteil auf. Dieser Mantelteil wirkt radial innenseitig mit einem von Zwischenstegen begrenzte Ausnehmungen sowie eine Durchgangsöffnung aufweisenden Aufnahmebereich zusammen, wobei dieser seinerseits eine Mehrkantwelle o. dgl. Antriebselement zur Drehmomentübertragung aufnehmen kann. Das erfindungsgemäß verbesserte Konzept der Walzenkonstruktion ist so optimiert, dass die jeweiligen Walzensegmente ausgehend von deren innerer Durchgangsöffnung in radialer Richtung mit einer mehrlagigen Struktur versehen sind.

## Beschreibung

Die Erfindung betrifft ein Walzensegment für Trenn- und Reinigungsvorrichtungen in insbesondere Hackfruchterntern und ein Verfahren zur Herstellung der Walzensegmente gemäß dem Oberbegriff des Anspruchs 1 bzw. 18. Mit einer derartigen, allgemein in Sortier- und Reinigungsanlagen der Landtechnik einsetzbaren Vorrichtung werden insbesondere während eines Rodevorgangs aus einem Gemischstrom zu trennende Kartoffeln von den Beimengungen separiert.

Bei einer gattungsbildenden Vorrichtung zum Trennen von Kartoffeln von Beimengungen gemäß DE 43 40 101 A1 sind jeweilige, quer zur Trennstrecke ausgerichtete Walzen vorgesehen, die einstückig aus elastisch nachgiebigem Material geformt sind und damit eine hohe weichelastische Deformationsfähigkeit aufweisen: Diese Walzen werden dabei im Bereich einer eine zentrale Durchgangsöffnung durchgreifenden Mehrkantwelle mit einem Antrieb verbunden, so dass der in Umfangsrichtung oberhalb dieser Durchgangsöffnung befindliche Bereich nach Art eines elastischen Mantelteils mit radial vorstehenden Mitnahmerippen auf das zugeförderte Boden-Erntegut-Gemisch einwirkt.

Bei einer Konstruktion gemäß EP 1 082 912 A2 ist ausgehend von der vorbeschriebenen Walzen-Konstruktion vorgesehen, dass die Walzen ein als einstückiger Formkörper ausgebildetes Mantelteil mit elastischen Eigenschaften aufweisen. Dieser insbesondere aus Polyurethan bestehende Mantelteil wird auf einem als Innenteil vorgesehenen Tragkörper aus zwei untereinander gleichen Formblechen fixiert. Denkbar ist dabei auch, dass der Tragkörper im Bereich der die Mehrkantwelle eines Antriebs umfassenden Durchgangsöffnung mit einem integralen Innenteil geformt wird, so dass das im Querschnitt einstückige Mantelteil eine spezielle Kontur in seinem Innenteil-Bereich aufweist und so eine formstabilere Fixierung des radial anschließenden "elastischen" Mantelteils möglich wird.

Gemäß EP 1 661 471 B1 ist das einstückige "Mantelteil-Konzept" dadurch verbessert, dass nunmehr einzelne Walzensegmente in Achsrichtung des Systems aneinanderreihbar sind. Die Mantelteile sind dabei in einstückiger Ausführung vorzugsweise aus Polyurethan geformt und können im Bereich einer zentralen Durchgangsöffnung auf die entsprechende Mehrkantwelle aufgeschoben werden. Die Durchgangsöffnung ist dabei von zwei diametral gegenüberliegenden Winkelstücken aus Metallblech begrenzt, so dass die Stabilität zur Drehmomentübertragung sichergestellt ist.

Bei einer Trennvorrichtung gemäß GB 2 432 097 A sind - ähnlich DE 43 40 101 A1 - jeweilige einstückige Gummi-Walzen mit elastischen Außenprofilen vorgesehen. Auch diese Gummiwalzen weisen im Querschnitt die zentrale Durchgangsöffnung auf, und im Abstand zu diesen sind jeweilige radiale Deformationskammern geformt, so dass unterschiedliche Deformationseigenschaften für den jeweiligen Trennprozess bereitgestellt werden.

Es hat sich gezeigt, dass bei den bekannten einstückigen Ausführungen von Walzen bzw. Walzensegmenten der Einsatz von langzeitstabilen und hinreichend elastischen Polyurethan-Werkstoffen erforderlich ist. Damit wird hochwertiges Material verwendet, mit dem die Gestehungskosten der gesamten Trenn- und Reinigungsvorrichtung nachteilig beeinflusst sind.

Bei einer Lösung gemäß EP 2 223 587 B1 wird eine variable Elastizität im Bereich einer Walze - ähnlich EP 1 661 471 - dadurch erreicht, dass ausgehend vom vergleichsweise formstabilen und für den Antrieb vorgesehenen Aufnahmebereich jeweilige Zwischenstege zum äußeren Mantelteil geführt sind. In den einstückig geformten Walzenkörper kann dabei im Bereich der Zwischenstege ein elastisches tubuläres Element eingebracht werden, das als zusätzliches Tragmittel wirkt.

Die Erfindung befasst sich mit dem Problem, für Trenn- und Reinigungsvorrichtungen vorgesehene Walzensegmente und ein Verfahren zu deren Herstellung so auszubilden, dass bei zumindest unverändert guten Trenn- und Überleitungsfunktionen, optimaler Deformationsfähigkeit und verbesserter Langzeitstabilität der Walzen deren anwendungsspezifisch variable Herstellung einfacher möglich ist und damit insgesamt eine Verringerung der Gestehungskosten erreicht wird.

Die Erfindung löst dieses Problem mit jeweiligen Walzensegmenten mit den Merkmalen des Anspruchs 1 und ein Verfahren zu deren Herstellung mit den Merkmalen des Anspruchs 18. Hinsichtlich wesentlicher weiterer Ausgestaltungen wird auf die Ansprüche 2 bis 17 bzw. 19 bis 25 verwiesen.

Trenn- und Reinigungsvorrichtungen für Hackfruchternter o. dgl. Anlagen der Landtechnik verwenden jeweilige, insbesondere aus Walzensegmenten zusammengesetzte Reinigungswalzen, deren insbesondere mit äußeren Mitnahmerippen versehenes Mantelteil - entsprechend seinem Querschnittsaufbau - variabel ausführbare weichelastische Deformationsfähigkeiten und -eigenschaften aufweisen kann. Die dafür effizient und für die Hackfrüchte schonend einsetzbaren weichelastischen Werkstoffe sind jedoch mit hohen Gestehungskosten verbunden.

Ausgehend von den bekannten Ausführungen von Reinigungswalzen mit Walzensegmenten sieht das vereinfachte Konzept vor, dass die bisher einen einstückigen Elastomer-Aufbau mit unterschiedlich steifen Zonen aufweisenden oder mit integrierten aussteifenden Metallstützen als zusätzliche Tragmittel geformten Walzensegmente in erfindungsgemäß verbesserter Ausführung mit einer mehrlagigen Struktur geformt sind.

Denkbar ist dabei auch, an Stelle der zur Walze zusammensetzbaren Walzensegmente auch eine komplette Walze als "einstückiges Teil" mit der erfindungsgemäßen Mehr-Lagen-Struktur herzustellen. Auch die Fertigung von landtechnischen Glattwalzen mit Mehr-Lagen-Struktur ist möglich.

Diese mehrlagige Struktur wird jeweils dadurch definiert, dass - ausgehend von der inneren Durchgangsöffnung des Walzensegmentes - dieses in radialer Richtung aus jeweiligen Lagen mit variierbarer Schichtdicke aufgebaut werden kann. Dabei ist vorgesehen, dass bei dieser funktionalen Struktur zumindest eine aus zumindest einem vergleichsweise preiswerten Träger-Material bestehende innere Lage und zumindest eine eine vergleichsweise geringe Schichtdicke aufweisende obere Mantelteil-Lage als darüber befindliche Funktionsschicht aus teurem Deformationsmaterial kombiniert werden. Damit können die Herstellungskosten derartiger Walzensegmente bzw. Walzen vorteilhaft verringert werden.

Das erfindungsgemäße System ist darauf abgestellt, dass das Walzensegment eine vorzugsweise nur zweilagige Struktur aufweist, die mit der die Durchgangsöffnung bildenden ersten Lage und einer dieser radial als elastisches Mantelteil zugeordneten zweiten Lage versehen wird. Vorteilhaft kann dabei ein struktureller Aufbau konzipiert werden, der zusätzliche Metallstrukturen, Stützlagen o. dgl. Tragmittel bekannter Walzensegmente entbehrlich macht.

Es hat sich gezeigt, dass die zumindest zwei Lagen des Walzensegmentes dabei vorteilhaft aus unterschiedlichem Kunststoff-Material formbar sind. Diese beiden Kunststoffe sind in ihrem Elastizitäts-Steife-Verhältnis optimal aufeinander abgestimmt. Damit wird erreicht, dass einerseits ein antreibendes Drehmoment unmittelbar auf die den Aufnahmebereich für ein Antriebselement bildende innere Lage des Zwei-Lagen-Segmentes sicher übertragbar ist und andererseits die äußere Lage als funktionales Mantelteil eine an die spezifischen Einsatzbedingungen angepasste Struktur aufweist.

Eine optimale Gestaltung dieses im Bereich der beiden Kunststoff-Lagen funktional optimierbaren Walzensegmentes sieht vor, dass dessen im radialen Querschnitt innere Lage in Form eines zumindest ein umfangsseitig angeordnetes Widerlagerprofil aufweisenden Kernformkörpers vorgesehen ist. Diesem aus vergleichsweise biegesteifem Material bestehenden Kernformkörper wird ein die äußere "elastische" Lage definierender Mantelformkörper zugeordnet. Dabei ist die zweilagige Struktur im Verbindungsbereich von Widerlagerprofil und Gegenprofil des Mantelformkörpers so verbunden, dass dieser beim Einsatz der Walze im Funktionszustand des Systems eine an sich bekannte drehfeste Fixierung im Zwei-Lagen-Verbund aufweist.

Es versteht sich, dass für diese Widerlagerprofil-Gegenprofil-Verbindung entsprechend dem Walzenkonzept variierbare Querschnittskonturen nutzbar sind. Ausgehend von den Abmessungen des Walzensegmentes sind in radialer Richtung unterschiedliche Eingriffslängen der jeweiligen Verbindungsprofile denkbar, und in Umfangsrichtung des Walzensegmentes ist eine variable Anzahl der vorbeschriebenen Profil-Verbindungen möglich.

Es hat sich gezeigt, dass ausgehend von dem im Querschnitt des Walzensegmentes als eine vergleichsweise formstabile Struktur wirksamen inneren Kernformkörper der mit diesem eine Verbundeinheit bildende Mantelformkörper - als in der Schichtdicke variabel zu bemessende Lage - jeweilige Kombinationen der Lagen mit unterschiedlichsten Abmessungen ermöglicht. Dabei kann der Mantelformkörper insbesondere in radialer Richtung einen fertigungstechnisch in seinen Abmessungen variierbaren und dabei zumindest bereichsweise aus dem elastischen Werkstoff bestehenden äußeren Funktionsbereich des Walzensegmentes so definieren, dass damit unterschiedliche Hackfruchternter an das jeweilige Erntegut anpassbar sind. Die Walzensegmente können dabei am Außenumfang mit Mitnahmeprofilen versehen werden, die als funktionale Teilbereiche an sich bekannt sind.

Eine optimale konzeptionelle Umsetzung dieser zweilagigen Verbundeinheit sieht vor, dass der Kernformkörper als ein vorgefertigtes Halbzeug bereitgestellt wird und dieses mit dem zumindest bereichsweise zugeordneten Mantelformkörper zu der aus den zumindest zwei unterschiedlichen Werkstoffen aufgebauten Einheit zusammengeführt wird. Mit Blick auf den Einsatz des Walzensegmentes versteht es sich, dass der Mantelformkörper als ein den Kernformkörper in Umfangsrichtung vollflächig umschließender elastischer Hüllkörper ausgebildet wird, der insbesondere die in radialer Richtung nach innen gerichtete Ausgleichsbewegungen nutzenden "Deformationsbereiche" aufweist.

Ausgehend von dem erfindungsgemäßen Konzept der Zwei-Lagen-Struktur ist vorgesehen, dass zwischen dem Kernformkörper und dem Mantelformkörper im Bereich der jeweiligen Widerlager-Gegenlager-Profile unterschiedliche Optionen zur Herstellung der Verbundeinheit denkbar sind. Dabei ist vorgesehen, dass zumindest bereichsweise jeweilige stoff-, kraft- und/oder formschlüssige Verbindungszonen gebildet werden.

Die erfindungsgemäße Ausführung des Zwei-Lagen-Systems sieht auch vor, dass der Kernformkörper und/oder der Mantelformkörper ihrerseits jeweils aus mehreren Werkstoffen formbar ist/sind. Vorzugsweise sind dabei unterschiedliche Kombinationen von Kunststoffen prinzipiell denkbar, so dass die materialspezifischen Herstellungskosten entsprechend variabel sind.

Entsprechend dem Einsatzzweck ist vorgesehen, dass der jeweilige Kernformkörper aus einem Werkstoff geformt ist, der - in einer Relation der jeweiligen Werkstoffkennwerte - zumindest eine größere Steifigkeit als der Mantelformkörper aufweist. Mit Blick auf die Gestehungskosten ist vorgesehen, dass der insbesondere in seinem Volumen vergleichsweise größere Kernformkörper aus einem im Kostenvergleich preiswerteren Werkstoff hergestellt ist.

Umfängliche Tests am Prototypen zur Realisierung des Zwei-Lagen-Walzensegmentes zeigen, dass die Verbundeinheit vorteilhaft einen aus thermoplastischem Kunststoff, duroplastischem Kunststoff und/oder glasfaserverstärktem Kunststoff bestehenden Kernformkörper ermöglicht. Dieser wird erfindungsgemäß mit einem zumindest bereichsweise aus weichelastischem Kunststoff oder Gummi geformten Mantelformkörper kombiniert. Dieser Mantelformkörper besteht dabei vorzugsweise aus Polyurethan, thermoplastischem Polyurethan oder thermoplastischem Elastomer.

Die konzeptionelle Umsetzung des am Kernformkörper radial abragenden Widerlagerprofils sieht vor, dass dieses vorzugsweise als Teilabschnitt eines mit einer Steigung verlaufenden Gewindeprofils geformt ist. Damit wird der Kernformkörper nach Art eines "Spiralkerns" geformt. Eine effektive Verbindung wird für dieses "ansteigende" Widerlagerprofil dadurch geschaffen, dass dieses an der Innenseite des zugeordneten Mantelformkörpers in eine jeweilige konform verlaufende Nutaufnahme eingreift und damit der zumindest formschlüssige Verbund der beiden Lagen gebildet ist.

In dieser Verbindungsposition von Kernformkörper und Mantelformkörper ergibt sich in dessen Längsrichtung - im Nahbereich der als "Zwischenstege" verlaufenden Verbundprofile - eine mit an sich bekannten Freiräumen geformte Deformationsstruktur. Entsprechend der Ausbildung dieser von den Verbindungsprofilen begrenzten Deformationsstruktur ist eine variable Ausbildung des Walzensegmentes bezüglich seiner elastischen Deformationseigenschaften erreichbar. Dabei sind radial außenseitig - angrenzend an die Freiräume - die ebenfalls "spiralförmig" verlaufenden Mitnahmeprofile angeformt.

Damit wird deutlich, dass mit der vorbeschriebenen Kombination aus Verbindungsprofilen und Deformationsstruktur unterschiedliche Ausführungen des Elastizitäts-Systems denkbar sind. Insbesondere können die sich zwischen den gewendelt verlaufenden Stützverbindungen in radialer Richtung der Deformationsstruktur erstreckenden Freiräume variabel bemessen werden. Diese in Längsrichtung des Mantelformkörpers gewendelt verlaufenden Freiräume können dabei eine im Querschnitt eckige oder runde Kanalstruktur bilden. Ebenso sind zusätzliche Längs- und/oder Querrippen innerhalb der Deformationsstruktur denkbar.

Eine für die Festigkeit des vorbeschriebenen Verbindungsaufbaus wesentliche Gestaltung im Bereich der Kernformkörper sieht vor, dass deren radial abragende Widerlagerprofile jeweils als "gewendeltes" Streifenprofil mit oberseitigem Erweiterungsansatz geformt sind. Dabei sind die Streifenprofile ihrerseits mit jeweiligen Queröffnungen versehen, so dass in diesem Bereich - zusätzlich zu der radialen Erfassung der Widerlagerprofile des Mantelformkörpers im Bereich des Erweiterungsansatzes - jeweilige tangentiale Verbindungsbereiche nutzbar werden. Dabei versteht es sich, dass mit den vorbeschriebenen Verbindungsprofilen einerseits unterschiedliche, beim Einsatz der Walze vom äußeren Funktionsbereich des Mantelformkörpers in das System eingetragene Zug- und Druckkraftbelastungen aufnehmbar sind und andererseits das Antriebsmoment im Bereich der zentralen Durchgangsöffnung optimal in die Zwei-Lagen-Struktur einleitbar ist.

In vorteilhafter Ausführung des Kernformkörpers ist im Bereich der Durchgangsöffnung eine dieses als Profilrahmen begrenzende Kontur geformt. Von dieser aus sind in radialer Richtung jeweilige Ansatzstreben zu einem Hüllzylinderteil hin gerichtet. An dessen Außenumfang wiederum sind mehrere der gewendelten Streifenprofile vorgesehen. Damit kann mit vergleichsweise geringem Materialeinsatz ein im Querschnitt als "Leichtbau-Fachwerk" ausgebildeter Kernformkörper bereitgestellt werden.

Eine denkbare Variante der erfindungsgemäßen Mehr-Lagen-Struktur sieht vor, dass diese im Bereich der zentralen Durchgangsöffnung eine mit dem Kernformkörper zusammenwirkende "dritte" Zusatzlage aufweist. Diese Zusatzlage kann dabei aus Metall bestehen. Ebenso ist vorgesehen, die in ihrer Materialstärke vergleichsweise "dünn" ausführbare Zusatzlage auch aus Kunststoff herzustellen. Dabei ist ein Material mit elastischen und damit schwingungsdämpfend wirkenden Kennwerten denkbar.

Zur Herstellung der vorbeschriebenen Verbindungseinheit der beiden Lagen im Bereich der zugeordneten Profile ist prinzipiell die Herstellung einer formschlüssigen Verbindung durch entsprechende Verpressung der beiden Lagen der Strukturen denkbar. Eine bevorzugte Ausführung sieht vor, dass im Bereich der Verbindungsprofile ein stoffschlüssiger Verbund aufgebaut wird. Dieser kann vorzugsweise durch einen - von den stofflichen Eigenschaften der beiden Lagen abhängigen - Formguß realisiert werden. Ebenso ist denkbar, dass im Bereich der Verbindungsprofile eine Klebeverbindung mit einem Kraftschluss kombiniert wird.

Zur Herstellung dieses für eine Trenn- und Reinigungsvorrichtung vorgesehenen Walzensegmentes ist insbesondere ein mehrstufiger Verfahrensablauf vorgesehen. Dabei wird in einem ersten Verfahrensschritt ein Kernformkörper mit Widerlagerprofil als Halbzeug gefertigt. Dieses kann dann mit einem zumindest bereichsweise den elastischen Mantelteil aufweisenden Mantelformkörper zu der zweilagigen Struktur als Verbundeinheit komplettiert werden.

Eine denkbare Variante sieht vor, dass der Kernformkörper und der Mantelformkörper als jeweilige - komplementäre Verbindungsprofile aufweisende - Halbzeuge bereitgestellt werden. Diese beiden Halbzeuge können dann durch ein entsprechendes Steck- und/oder Pressverfahren kraft- und/oder formschlüssig so verbunden werden, dass zumindest die beim Einsatz in der Walze erforderliche Verbindungsstabilität in Umfangsrichtung zwischen den beiden "Einzelteilen" des Zwei-Lagen-Systems gewährleistet ist.

Die optimale Ausführung des Verbindungs-Verfahrens sieht jedoch vor, dass durch eine zumindest bereichsweise zwischen Mantelformkörper und Kernformkörper vorgesehene stoffschlüssige Verbindung die zweilagige Struktur hergestellt wird. Ausgehend von allgemein bekannten Fertigungsphasen ist erfindungsgemäß vorgesehen, dass der Mantelformkörper durch einen den Kernformkörper zumindest bereichsweise umfassenden Gießvorgang erzeugt und dabei gleichzeitig - zusätzlich zum Formschluss - ein stoffschlüssiger Verbund zwischen den beiden Lagen der Struktur hergestellt werden kann.

Ebenso ist denkbar, dass die zweilagige Struktur der Verbundeinheit durch einen Spritzgießvorgang erzeugt werden kann.

Ausgehend von den stofflichen Eigenschaften der für die beiden Lagen verwendeten Materialien können dabei Verbundkombinationen geschaffen werden, die in funktionsrelevanten stoffschlüssigen Verbindungszonen entsprechend den Verfahrensparametern variierbare Schichtungs- oder Durchdringungsstrukturen aufweisen. In dieser Verfahrensphase mit einer Lagen-Verbund-Herstellung des Walzensegmentes ist auch die geometrisch variable Gestaltung der beiden, die Lagen bildenden Komponenten zu beachten, da auch von den geometrischen Formen aus eine jeweilige Optimierung der Verfahrensparameter denkbar ist.

Eine zweckmäßige Ausführung der Verfahrensführung sieht vor, dass die zweilagigen Walzensegmente durch einen in einer Gießkokille erfolgenden Gießvorgang erzeugt werden. Dazu wird der vorgeformte Kernformkörper als Halbzeug in die Gießkokille so eingelegt, dass dabei eine den Mantelformkörper abbildende Formzone als Gießzone frei bleibt. Diese Gießzone wird anschließend mit dem flüssigen Elastomer-Kunststoff gefüllt. Im Anschluss an eine werkstoffspezifische Aushärtungsphase kann dann das Walzensegment als zweilagige Verbundeinheit aus der Gießkokille entnommen werden.

Entsprechend dem vorgesehenen Verfahrensablauf ist denkbar, dass während des Gießvorgangs in den Kernformkörper ein dessen zentrale Durchgangsöffnung aussteifender Stabilisator eingebracht ist. Ebenso ist denkbar, dass an Stelle der eine einteilige Ausführung aufweisenden Gießkokille eine mehrteilige Baugruppe verwendet wird oder die beiden Kunststoffe gleichzeitig oder nacheinander in eine entsprechend anzupassende Gießform eingebracht werden und so das komplette Walzensegment in einem Ablauf erzeugt wird.

Eine weitere Verfahrensführung zur stoffschlüssigen Verbindung der beiden als Lagen vorgefertigten Komponenten sieht vor, dass der Mantelformkörper mit dem Kernformkörper auch durch einen zumindest bereichsweise erfolgenden Vulkanisiervorgang verbunden werden kann.

Weitere Einzelheiten und vorteilhafte Ausgestaltungen der Erfindung ergeben sich aus der nachfolgenden Beschreibung und der Zeichnung, in der die erfindungsgemäße Ausführung der Trenn- und Reinigungsvorrichtung mit jeweiligen Walzensegmenten sowie einer Einrichtung zu deren Herstellung veranschaulicht sind. In der Zeichnung zeigen:
- Fig. 1 bis Fig. 3: jeweilige Ansichten eines Walzensegmentes mit an sich bekannter Gestaltung im Bereich des funktionalen Außenumfangs,
- Fig. 4: eine teilweise geschnittene Seitenansicht ähnlich Fig. 1 mit einer Verdeutlichung einer erfindungsgemäßen mehrlagigen Struktur im Inneren des Walzensegmentes,
- Fig. 5: eine Stirnansicht des erfindungsgemäßen Walzensegmentes gemäß Fig. 4,
- Fig. 6: eine Perspektivdarstellung des Walzensegmentes gemäß Fig. 4,
- Fig. 7: eine Rückansicht eines im Inneren des Walzensegmentes vorgesehenen Kernformkörpers als erfindungsgemäßes Halbzeug mit linksdrehender Außenprofilierung,
- Fig. 8: eine Vorderansicht des Kernformkörpers gemäß Fig. 7,
- Fig. 9: eine Rückansicht ähnlich Fig. 7 mit einer rechtsdrehenden Außenprofilierung am Kernformkörper,
- Fig. 10: eine Vorderansicht des Kernformkörpers gemäß Fig. 9,
- Fig. 11: eine perspektivische Prinzipdarstellung einer zur Herstellung des zweilagigen Walzensegmentes vorgesehenen Gießform mit darüber in Einschubstellung befindlichem Kernformkörper als vorgeformtes Halbzeug,
- Fig. 12: eine teilweise geschnittene Ansicht der Gießform gemäß Fig. 11 mit innen liegendem Kernformkörper,
- Fig. 13: eine teilweise geschnittene Ausführung der Gießkokille gemäß Fig. 12 mit einem den inneren Kernformkörper als äußere Lage umgreifenden Mantelteil,
- Fig. 14: eine perspektivische Prinzipdarstellung ähnlich Fig. 11 mit einer Entnahmephase des nunmehr zweilagigen Walzensegmentes aus der Gießform,
- Fig. 15: eine teilweise geschnittene Ansicht einer zweiten Ausführung des Walzensegmentes, das einen aus zwei Teilkörpern zusammengesetzten Kernformkörper mit diesen umgreifendem Mantelformkörper aufweist,
- Fig. 16: eine vergrößerte Einzeldarstellung des Kernformkörpers gemäß Fig. 8 mit einer Schnittlinie A-A,
- Fig. 17: eine perspektivische Ausschnittsdarstellung einer mit Walzen aus Walzensegmenten aufweisenden Trenn- und Reinigungsvorrichtung,
- Fig. 18: eine Prinzipdarstellung der Trenn- und Reinigungsstrecke mit Seitenansicht der eine Trennstrecke bildenden Walzen-Paarungen,
- Fig. 19 und Fig. 20: jeweilige Ansichten des Walzensegmentes ähnlich Fig. 2 und Fig. 3, wobei im Bereich der Durchgangsöffnung zumindest eine dritte Lage zur Aufnahme des Antriebselementes vorgesehen ist.

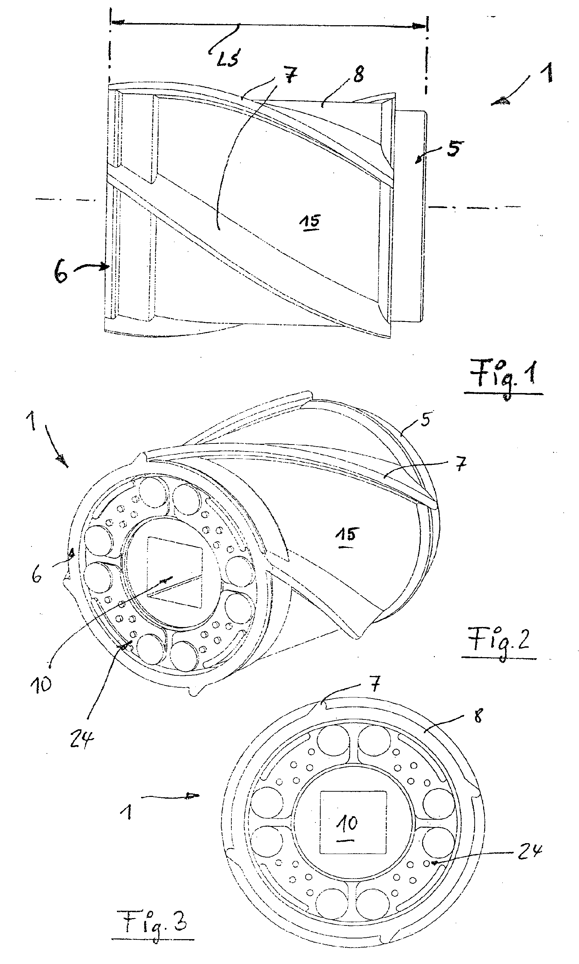

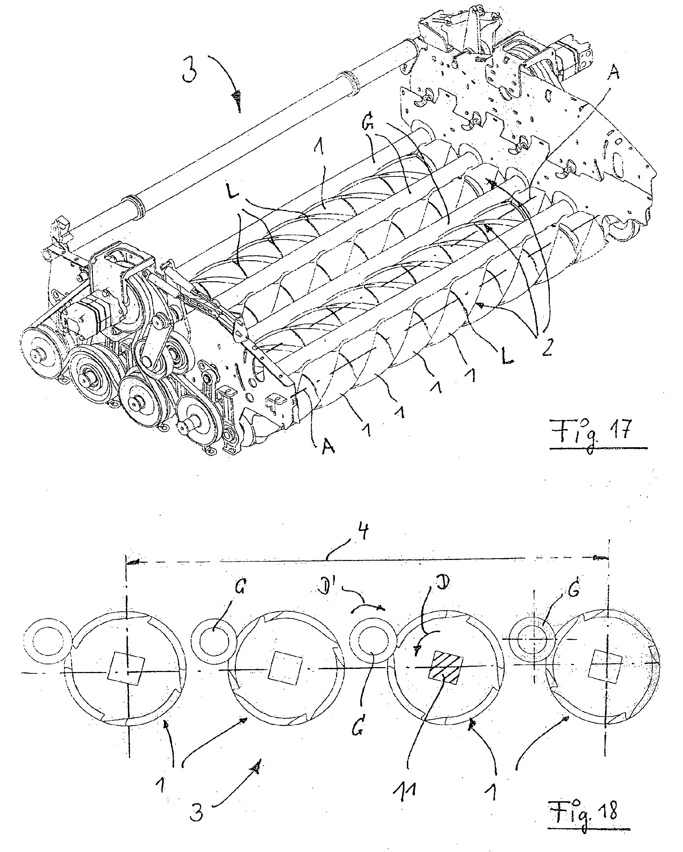

In Fig. 1 bis Fig. 3 ist ein Walzensegment 1 dargestellt, das zum Aufbau einer zusammengesetzten Walze 2 (Fig. 17) vorgesehen ist. Aus diesen Übersichtsdarstellungen wird deutlich, dass mit Blick auf die funktionalen Einzelteile derartiger Walzensegmente 1 deren "außen liegende" Konturgestaltung im Wesentlichen der gattungsbildenden Konstruktion gemäß EP 1 661 471 B1 entspricht. Aus der Zusammenschau von Fig. 17 und Fig. 18 wird deutlich, dass vorzugsweise mehrere der Walzen 2 für Trenn- und Reinigungsvorrichtungen 3 eingesetzt werden, deren Anwendung insbesondere in nicht näher dargestellten Maschinen zur Hackfruchternte oder -verarbeitung vorgesehen ist.

Aus mehreren derartigen Walzen 2 kann dabei eine insgesamt mit 4 bezeichnete und auch als autarke Baueinheit einsetzbare Trenn- und Reinigungsstrecke 4 (Fig. 18) aufgebaut werden, in deren Bereich vorzugsweise mehrere, in Richtung ihrer Walzenlängsachse A parallel angeordnete Walzen 2 in Kombination mit Glattwalzen G o. dgl. Zusatzelementen vorgesehen sind. In Richtung der Walzenlängsachse A sind dabei koaxial aneinandergrenzende Walzensegmente 1 so angeordnet, dass deren jeweilige Endprofile 5, 6 (Fig. 1) aneinanderliegen können oder aufeinandersteckbar sind (Spalt L, Fig. 17).

Dabei sind die Walzensegmente 1 in bereits bekannter Ausführung mit einem aus elastisch nachgiebigem Material bestehenden sowie nach außen vorstehende Mitnahmerippen 7 aufweisenden Mantelteil 8 versehen. Dieses Mantelteil 8 ist bei der Konstruktion gemäß EP 1 661 471 B1 innenseitig mit einem von Zwischenstegen begrenzbare Ausnehmungen, eine zentrale Durchgangsöffnung 10 sowie zusätzliche Tragmittel aufweisenden Aufnahmebereich versehen. Dieser Bereich der Öffnung 10 ist so geformt, dass vorzugsweise eine Mehrkantwelle o. dgl. Antriebselement 11 (Fig. 18) zur Drehmomentübertragung (Pfeil D, Fig. 18) einsetzbar ist.

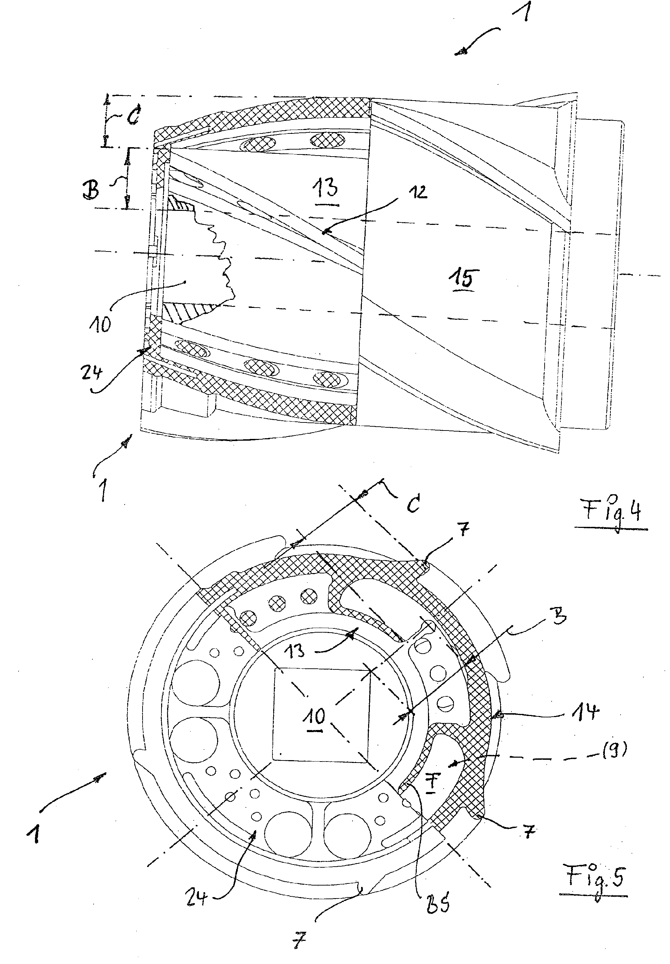

Ausgehend von der Vielzahl bereits bekannter - dem Walzensegment gemäß Fig. 1 bis Fig. 3 ähnlichen - Konstruktionen zeichnen sich die Walzensegmente 1 in erfindungsgemäßer Gestaltung dadurch aus, dass diese - in ihrem Quer- und Längsschnitt (Fig. 4, Fig. 5) sichtbar - eine mehrlagige Ausführung mit Kunststoff-Strukturen aufweisen. Diese eine jeweilige Lage B und eine Lage C definierende Struktur ist erfindungsgemäß als ein unmittelbarer Schichtverbund ausgeführt. Dabei stellt die ausgehend von der inneren Durchgangsöffnung 10 in radialer Richtung zu betrachtende zweilagige Ausführung die bevorzugte Konstruktion dar.

Es hat sich gezeigt, dass eine optimale Ausführung des Walzensegmentes 1 bereits dann nutzbar ist, wenn dieses nur die zweilagige Struktur mit den Lagen B und C aufweist. Die erste Lage B bildet dabei die Durchgangsöffnung 10, und dieser ersten Lage B ist die zweite Lage C als das radiale elastische Mantelteil zugeordnet.

Für eine effiziente technische und wirtschaftlich verbesserte Umsetzung des erfindungsgemäßen Zwei-Lagen-Walzensegmentes 1 ist vorgesehen, dass dieses aus unterschiedlichen Materialien, nämlich zwei optimal zu kombinierenden Kunststoffen, besteht. Damit wird erstmals eine von Stützmetallen o. dgl. zusätzlichen Trägermitteln innerhalb dieses Schichtverbundes freie Konstruktion an einem Walzensegment 1 realisiert. Auf dieser Basis wird für unterschiedliche Konstruktions-Varianten ein überraschend effektives Segment bereitgestellt. Ausgehend von den funktionsrelevanten Eigenschaften bekannter elastischer Mantelteile 8 als Lage C (Fig. 5) kann an diese nunmehr die innen liegende Kunststoff-Lage B so angepasst werden, dass das antreibende Drehmoment D weiterhin unmittelbar im Bereich der Durchgangsöffnung 10 aufnehmbar ist (Pfeil D, Fig. 18).

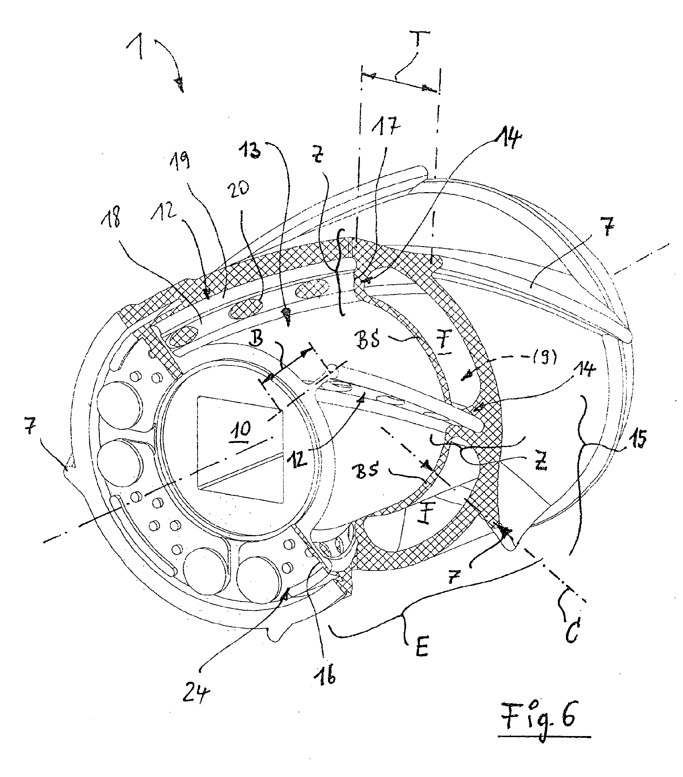

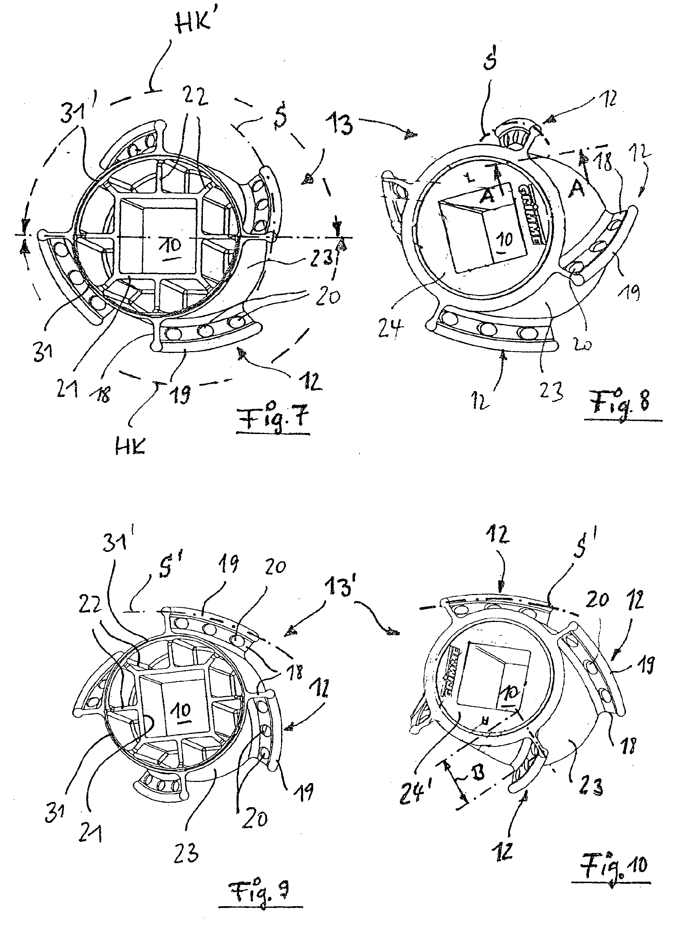

Aus den nachfolgenden Übersichtsdarstellungen in Fig. 6 bis Fig. 16 wird deutlich, dass das Walzensegment 1 - wie im radialen Querschnitt in Fig. 5 gezeigt - mit einem zumindest ein umfangsseitig angeformtes Widerlagerprofil 12 aufweisenden Kernformkörper 13 versehen ist (Fig. 7). Diesem Kernformkörper 13 ist zumindest ein Gegenprofil 14 an dem als Mantelformkörper 15 ausgebildeten Mantelteil 8 zugeordnet. Diese damit zweilagige Struktur B, C (Fig. 4, Fig. 5) weist im Bereich der beiden ineinandergreifenden Profile 12 und 14 eine drehfeste Verbindung so auf, dass die bekannten Funktionseigenschaften der Trennstrecke 4 (Fig. 17, Fig. 18) gewährleistet sind.

Die konstruktive Umsetzung des Walzensegmentes 1 sieht vor, dass ausgehend von dem als ein vergleichsweise formstabiles Substrat ausgebildeten inneren Kernformkörper 13 der mit diesem eine Verbundeinheit bildende Mantelformkörper 15 so zu bemessen ist, dass dieser zumindest in radialer Richtung einen fertigungstechnisch in seinen Abmessungen variierbaren Funktionsbereich mit an die Einsatzbedingungen der Reinigungsvorrichtung 3 anpassbaren Querschnittsprofilierungen bildet. Dabei ist der Mantelformkörper 15 zumindest bereichsweise aus dem an sich bekannten elastischen Werkstoff geformt, mit dem anwendungsspezifische Deformationsbereiche und damit Anpassungen an die auf der Trennstrecke 4 zu bearbeitenden Schüttgüter, Früchte o. dgl. Transportgüter möglich sind.

Aus den Darstellungen gemäß Fig. 7 bis Fig. 10 ist die optimale Gestaltung des als ein Halbzeug bereitstellbaren Kernformkörpers 13, 13' dargestellt. Dieses Halbzeug bildet mit dem zumindest bereichsweise zugeordneten Mantelformkörper 15 die aus zumindest zwei unterschiedlichen Werkstoffen aufgebaute Verbundeinheit E (Fig. 6). Dabei wird deutlich, dass der Mantelformkörper 15 als ein den Kernformkörper 13 in Umfangsrichtung vollflächig umschließender, umgebender elastischer Hüllkörper ausgebildet ist. Dabei ist vorgesehen, dass der Kernformkörper 13 vollflächig umschlossen ist (nicht näher dargestellt). Ausgehend von jeweiligen Hohlräumen und Verbindungszonen können praktisch auch anlagefreie Umhüllungsbereiche zwischen den Körpern 13 und 15 vorgesehen sein.

Die gemäß Fig. 6 mit einer Kreuzschraffierung verdeutlichte Hüllkontur des Mantelformkörpers 15 zeigt, dass diese Hüllkontur in einem Bereich 16 auch bis zur Stirnseite des Walzensegmentes 1 und damit den inneren Kernformkörper 13 an dessen Stirnseite teilweise überdeckend verlaufend ausgebildet werden kann.

Ausgehend vom bevorzugten Aufbau der Verbundeinheit E mit mehreren der Widerlagerprofile 12 und Gegenprofile 14 ist eine variable Herstellung des belastungsstabilen Schichtverbundes der Lagen B und C denkbar. Dabei sind unterschiedliche fertigungstechnische Varianten realisierbar, wobei zumindest bereichsweise jeweilige stoff-, kraft- und/oder formschlüssige Verbindungszonen bei der Herstellung der Verbundeinheit E geschaffen werden. Diese Verbindungsvielfalt kann auch dadurch erweitert sein, dass der Kernformkörper 13 und/oder der Mantelformkörper 15 jeweils aus mehreren Werkstoffen, insbesondere jeweiligen Kunststofflagen, aufgebaut und geformt sind/ist.

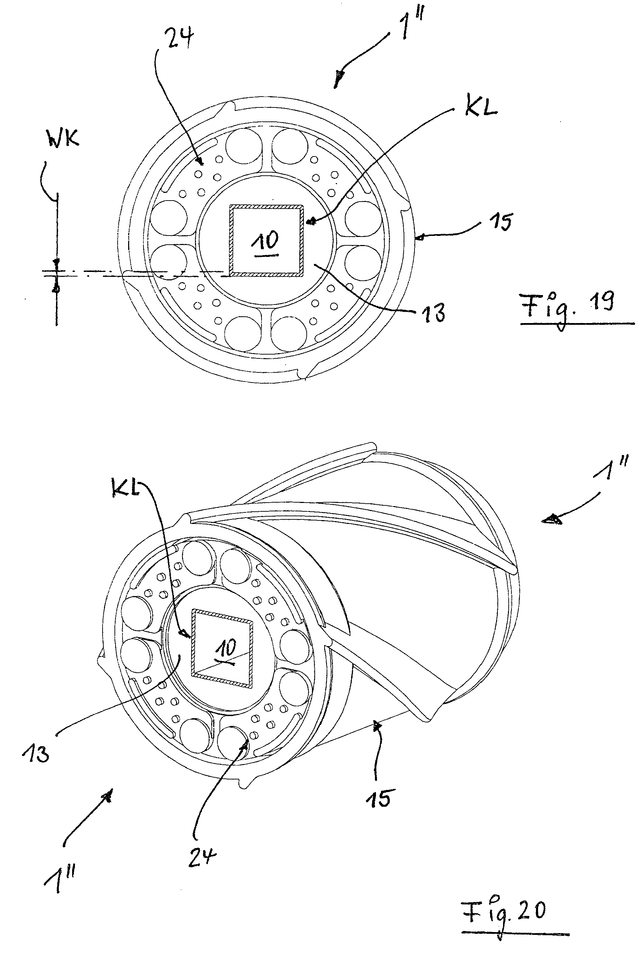

Ein erfindungsgemäß wesentliches Ziel mit Blick auf die Anwendung der Walzensegmente 1 (Fig. 19) wird dadurch erreicht, dass der jeweilige Kernformkörper 13 aus einem Werkstoff gebildet ist, der - in einer Relation jeweiliger Werkstoffkennwerte - zumindest eine größere Steifigkeit als der Mantelformkörper 15 aufweist. Vorzugsweise werden die Gestehungskosten dadurch gesenkt, dass der Kernformkörper 13 insbesondere aus einem im Kostenvergleich preiswerteren Werkstoff hergestellt wird.

Diese kostenoptimale Ausführung der Verbundeinheit E sieht vor, einen aus thermoplastischem Kunststoff, duroplastischem Kunststoff und/oder glasfaserverstärktem Kunststoff bestehenden Kernformkörper 13 mit einem zumindest bereichsweise aus weichelastischem Kunststoff oder Gummi geformten Mantelformkörper 15 zu kombinieren. Der Mantelformkörper 15 bildet dabei eine Lage B, die vorzugsweise aus Polyurethan (PUR), thermoplastischem Polyurethan (TPU, TPE, TPO, TPV, TPC) oder thermoplastischem Elastomer (TPS, TPA) besteht.

Die Perspektivdarstellungen gemäß Fig. 7 bis Fig. 10 verdeutlichen die konstruktive Gestaltung des Kernformkörpers 13, dessen zumindest bereichsweise mit der konformen Aufnahmestruktur des Gegenprofils 14 am Mantelformkörper 15 zusammenwirkendes Widerlagerprofil 12 vorzugsweise nach Art eines Gewindeprofils mit einer Steigung gemäß Linie S geformt ist. Dieses Gegenprofil 14 greift in Verbindungsstellung in eine konform verlaufende Nutaufnahme 17 als Gegenprofil 14 an der Innenseite des Mantelformkörpers 15 ein (Fig. 6).

Aus den Schnittdarstellungen gemäß Fig. 4 bis Fig. 6 wird die optimale Gestaltung im Bereich der äußeren Lage C deutlich, wobei dieser Mantelformkörper 15 hier in Längsrichtung des Walzenkörpers 1 eine mit an sich bekannten Freiräumen F (Fig. 5) geformte Deformationsstruktur mit Zwischenstegen Z bildet. In deren Bereich wirken das Widerlagerprofil 12 und die Nutaufnahme 17 als effiziente Form-StützVerbindung zusammen. Dabei wird erreicht, dass in Umfangsrichtung des Walzensegmentes 1 zwischen den gewendelt verlaufende Zwischenstege Z bildenden Stützverbindungen die jeweiligen Freiräume F der Deformationsstruktur angeordnet sind. Dieser Deformationszone ist außenseitig das jeweilige Mitnahmeprofil 7 in einem optimalen Abstand (Pfeil T, Fig. 6) zum Zwischensteg Z zugeordnet.

Die konstruktive Gestaltung in diesem Bereich sieht auch vor, dass die in Längsrichtung des Mantelformkörpers 15 gewendelt verlaufenden und eine den Kernformkörper 13 bedeckende Bodenschicht BS aufweisenden Freiräume F variable Querschnittsstrukturen definieren können. Dabei ist vorgesehen, dass die Freiräume F einen oder mehrere Teilbereiche bilden können, die im Querschnitt jeweilige eckige und/oder runde Umgrenzungskonturen aufweisen. Ebenso ist denkbar, dass im Bereich F weitere Teil-Stege verlaufen und damit die Freiräume F unterteilt sind (nicht näher dargestellt).

Die in Fig. 7 bis Fig. 10 dargestellten Kernformkörper 13 sind im Bereich der eine nach links gerichtete Steigung S (Fig. 7) oder eine nach rechts gerichtete Steigung S' (Fig. 9) aufweisenden Widerlagerprofile 12 jeweils in Form von Streifenprofilen 18 ausgebildet. An diesen der Steigung S, S' folgenden Streifenprofilen 18 kann ein zum Gegenprofil 14 des Mantelformkörpers 15 (Fig. 6) gerichteter Erweiterungsansatz 19 vorgesehen sein. Damit wird die formschlüssige Verbindung in radialer oder tangentialer Zug-Druck-Richtung stabilisiert. Zusätzlich kann das Widerlagerprofil 12 in seiner funktionalen Wirkung dadurch verbessert werden, dass im Bereich des Streifenprofils 18 jeweilige Queröffnungen 20 vorgesehen sind.

Aus den in Vorderansicht und Rückansicht gemäß Fig. 7 und Fig. 8 bzw. Fig. 9 und Fig. 10 gezeigten Kernformkörper-Darstellungen wird außerdem deutlich, dass der Kernformkörper 13 ausgehend von seiner zentralen Durchgangsöffnung 10 - an Stelle eines nicht dargestellten "Vollprofils" - vorzugsweise mit einem einen diese umgebenden Profilrahmen 21 aufweisenden Hohlprofil-Tragwerk geformt wird. Von dem zentralen Profilrahmen 21 aus ragen jeweilige Ansatzstreben 22 radial ab, und diese sind anderenends mit einem Hüllzylinderteil 23 verbunden. Am Außenumfang des Hüllzylinderteils 23 sind die gewendelt verlaufenden Streifenprofile 18 vorzugsweise einstückig angeformt.

Aus den Vorderansichten gemäß Fig. 8 und Fig. 10 wird der teilweise Verschluss des inneren Tragwerkes deutlich. Die Ausführung der "links gewendelten" Kernformkörper 13 (Fig. 7 und Fig. 8) ist mit einem Deckelteil 24 geformt. Die Ausführung gemäß Fig. 9 und Fig. 10 ist auf den "rechts gewendelten" Kernformkörper 13 gerichtet, der einen Deckelteil 24' aufweist und nur im Bereich der Steigung S "geänderte" Widerlagerprofile 12 bereitstellt. Vorteilhaft sind die jeweiligen Kernformkörper 13 einstückig geformt, wobei prinzipiell auch eine mehrteilige Ausführung (nicht dargestellt) denkbar ist. Mit dieser Streben-Hohlkammer-Konstruktion der Kernformkörper 13 wird deren materialsparende Ausführung als "fachwerkartiger" Stützkörper deutlich. Prinzipiell ist jedoch auch vorgesehen, dass der Kernformkörper 13 - ausgehend von der längs gerichteten Durchgangsöffnung 10 - im radialen Querschnitt als ein Vollprofil-Körper geformt sein kann.

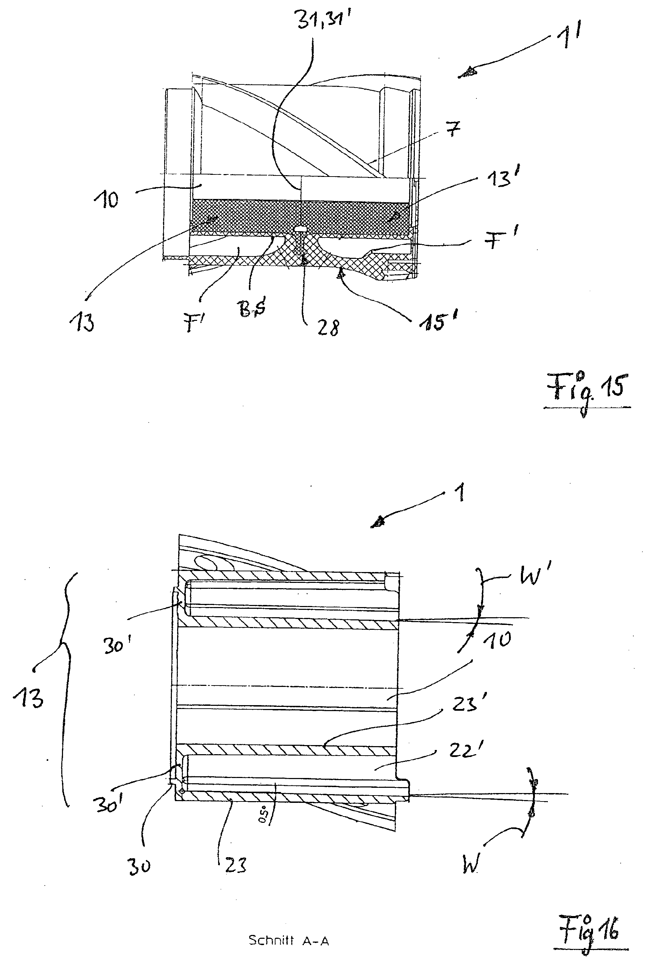

Aus einer Zusammenschau von Fig. 7 bis Fig. 10 mit der Schnittdarstellung gemäß Fig. 15 wird deutlich, dass das komplette Walzensegment 1' auch zwei der paarweise verbindbaren Kernformkörper 13, 13 oder 13', 13' aufweisen kann. Dazu sind die Kernformkörper 13, 13'jeweils in einem Halbkreis HK, HK' mit einem stirnseitigen Profilbereich 31, 31' versehen. Damit können die beiden Teile 13, 13 bzw. 13', 13' nach Art einer Nut-Feder-Verbindung axial zusammengesetzt werden (Fig. 15). Es versteht sich, dass damit die Hohlräume im Bereich des inneren Tragwerkes aneinandergelegt werden und andererseits mit den beiden äußeren Deckelteilen 24, 24' ein geschlossenes System erreicht ist.

In Fig. 19 und Fig. 20 ist eine denkbare Erweiterung des Walzensegmentes 1" der Zwei-Lagen-Struktur B, C dargestellt. Dabei ist im Bereich der Durchgangsöffnung 10 eine "dritte Lage" in Form der als Zusatzlage angeordneten Innenstruktur KL vorgesehen. Diese eine vergleichsweise geringe Wandstärke WK aufweisende Lage KL kann aus variierbaren Materialien bestehen. Dabei sind Ausführungen aus Metall oder Kunststoff denkbar. Vorzugsweise ist auch eine Anwendung von PU-Kunststoff vorgesehen, um die Dämpfungseigenschaften von elastischen Materialkennwerten zu nutzen.

Ausgehend von dem vorbeschriebenen und aus den Details gemäß Fig. 1 bis Fig. 10 sowie Fig. 19 und Fig. 20 ersichtlichen Walzensegment 1, 1', 1" mit der erfindungsgemäßen mehrlagigen Struktur B, C ergeben sich unterschiedliche Verfahrens-Varianten bei der Herstellung dieser zumindest als Zwei-Lagen-Einheit ausgeführten Segmente.

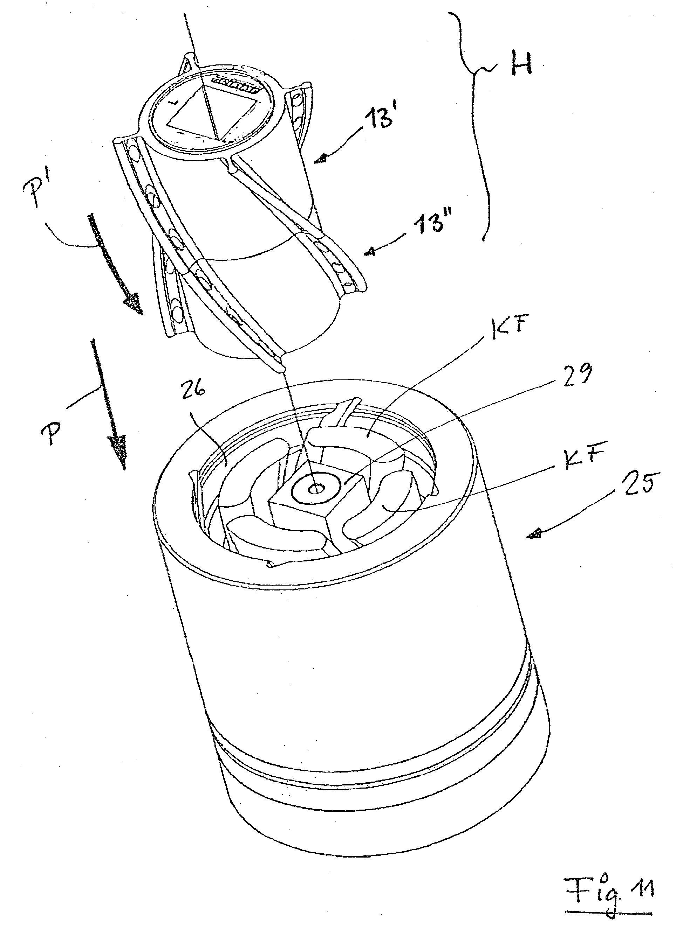

Eine vergleichsweise einfache Verfahrensführung ist darauf gerichtet, dass ausgehend von einem als Kernformkörper 13 mit Widerlagerprofil 12 gefertigten Halbzeug H (Fig. 11) dieses mit einem zumindest bereichsweise den elastischen Mantelteil 8 (Fig. 1) aufweisenden Mantelformkörper 15 zu einer zweilagigen Struktur als die Verbundeinheit E verbunden wird (Fig. 6). Dabei ist prinzipiell denkbar, dass zum Aufbau dieser zweilagigen Verbundeinheit E jeweilige Einzelteile aus zumindest zwei unterschiedlichen Kunststoff-Materialien verwendet werden und der Mantelformkörper 15 auf dem Kernformkörper 13 durch eine einen kraft- und/oder formschlüssigen Verbund bewirkende Verbindungstechnik (Ablauf nicht dargestellt) festgelegt wird. Dabei versteht es sich, dass der Kernformkörper 13 und der Mantelformkörper 15 als jeweilige komplementäre Verbindungsprofile aufweisende Halbzeuge bereitgestellt und dann mittels jeweiliger Hilfswerkzeuge (nicht dargestellt) verbunden werden (ähnlich: Fig. 11). Bei der "mechanischen Verbindungstechnik" ist denkbar, dass der Verbund der beiden Teile bereits zwischen einem einzigen Widerlagerprofil 12 am Kernformkörper 13 und einem einzigen Gegenprofil 14 am Mantelformkörper 15 so hergestellt werden kann, dass die vorbeschriebenen Drehmomente D (Fig. 18) in Einbaulage (Fig. 17) aufnehmbar sind. Für diese vorbeschriebenen Verfahrensführungen beim Verbinden zu der Zwei-Lagen-Einheit ist die kombinierte Herstellung mittels Form- und Kraftschluss vorgesehen.

Eine weitere Variante des Herstellungsverfahrens zum Verbinden der beiden Lagen B und C sieht vor, dass zumindest bereichsweise zwischen Mantelformkörper 15 und Kernformkörper 13 eine stoffschlüssige Verbindung hergestellt wird. Dieser stoffschlüssige Verbund kann prinzipiell in Form einer Klebeverbindung aufgebaut werden, so dass auch eine Kombination mit den vorbeschriebenen kraft- und/oder formschlüssigen Verbindungsvarianten denkbar ist.

Eine bevorzugte Ausführung zur Herstellung des erfindungsgemäßen Walzensegmentes 1 sieht vor, dass eine Verbindungstechnik auf Basis eines Gießvorgangs genutzt wird. Dabei kann der Mantelformkörper 15 durch einen den Kernformkörper 13 zumindest bereichsweise umfassenden Gieß- oder Spritzgießvorgang erzeugt werden. In jedem Fall wird gleichzeitig mit dem Gießvorgang auch ein stoffschlüssiger Verbund zwischen den beiden Lagen B und C der Struktur hergestellt (Fig. 11 bis Fig. 14). Prinzipiell denkbar ist dabei auch, dass die zweilagige Struktur B, C der Verbundeinheit E auch durch einen Spritzgießvorgang (nicht näher dargestellt) erzeugt und ein dabei hergestellter Profilstrang auf die entsprechende Segmentlänge LS (Fig. 1) zugeschnitten wird.

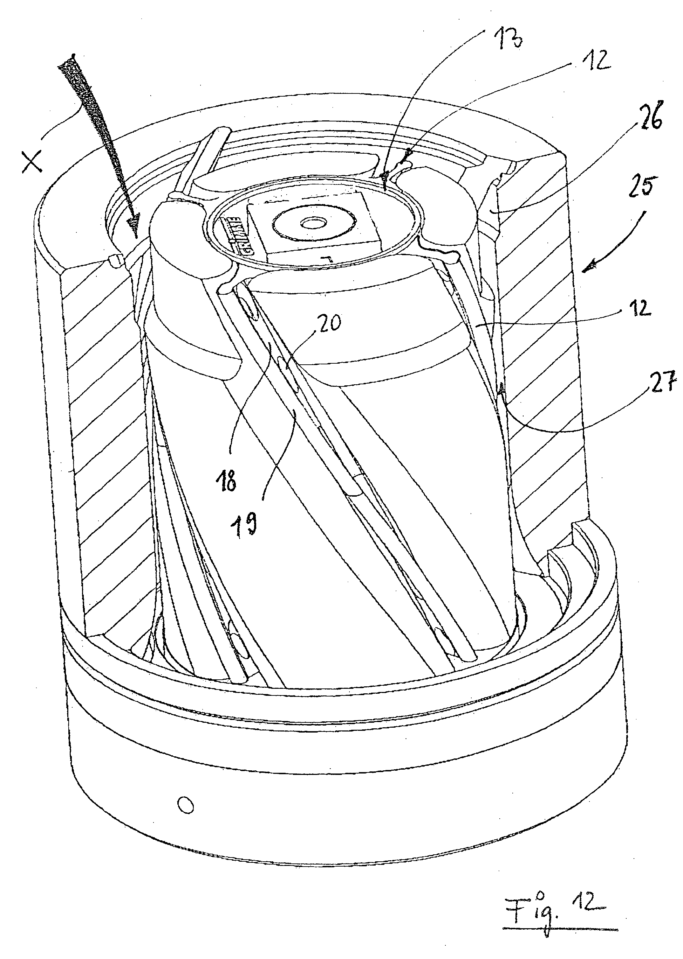

Aus den Übersichtsdarstellungen gemäß Fig. 11 bis Fig. 14 wird die Anwendung dieses Gießvorgangs deutlich, wobei hier eine Gießkokille 25 genutzt wird. Der als Halbzeug H - hier in zweiteiliger Ausführung mit den Kernformkörpern 13 und 13' - bereitgestellte Kernformkörper 13 wird in die Gießkokille 25 eingelegt (Pfeil P). Nach dieser Einbauphase (Fig. 12) ist der Kernformkörper 13 so platziert, dass zwischen der Innenwandung 26 der Kokille 25 und dem Außenumfang des Kernformkörpers 13 eine "spaltförmige" Formzone 27 frei bleibt. Entsprechend der gewinde- oder spiralförmigen Steigung S, S' der Widerlagerprofile 12 erfolgt das Einsetzen des Halbzeuges H durch eine Schwenk-Schub-Bewegung P'-P (Fig. 11).

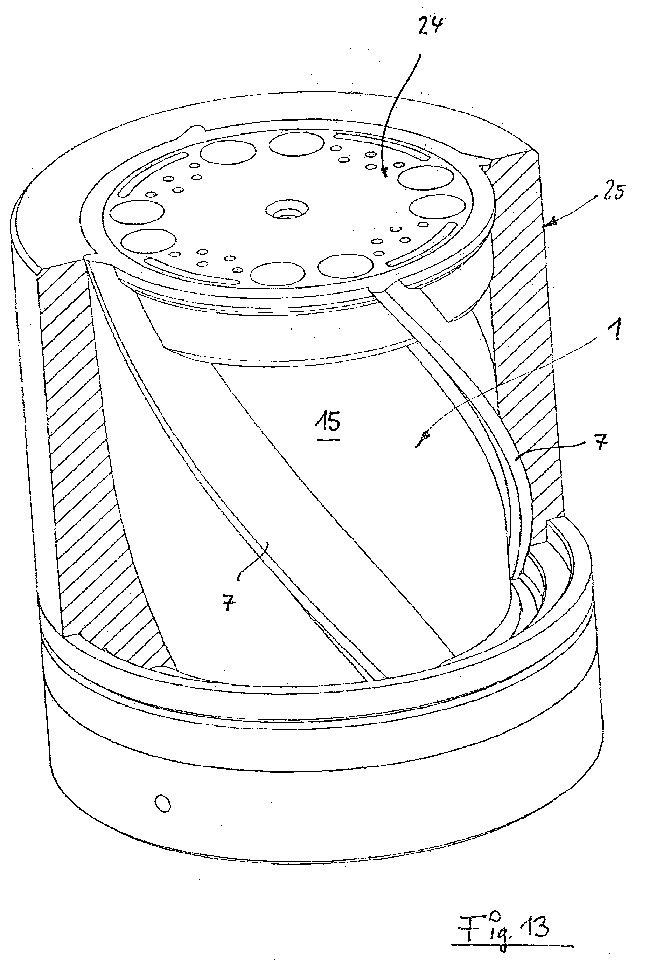

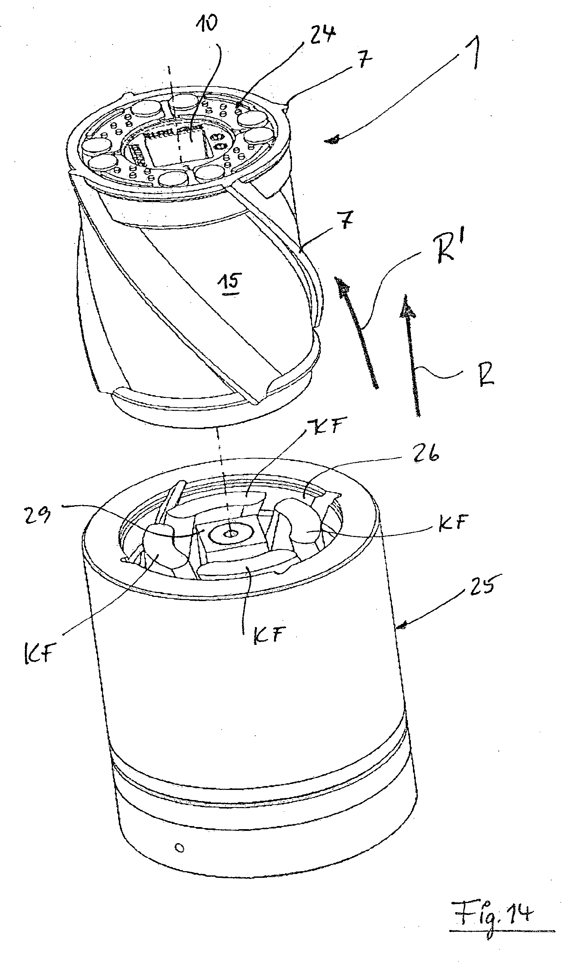

In einer Pfeilrichtung X (Fig. 12) wird nunmehr flüssiger Kunststoff in die Formzone 27 eingefüllt, so dass diese im Wesentlichen ringförmige und die Profil-Konturen des am Endprodukt äußeren Mantelteils C abbildende Kontur vollständig ausgefüllt wird. In dieser Füllphase umfließt der flüssige Kunststoff auch die spiralförmig verlaufenden Widerlagerprofilierungen 12, so dass in deren Bereich das Streifenprofil 18 und auch der Erweiterungsansatz 19 erfasst werden. Gleichzeitig werden die Queröffnungen 20 so durchströmt, dass in diesen Verbindungszonen ein kompletter Formschluss gebildet wird (Fig. 13). Bei diesem Herstellen der Mantel-Lage C werden gleichzeitig jeweilige Kernformen KF der Gießkokille 25 umströmt, so dass damit die Freiräume F (nach dem Entformen, Fig. 14) entstehen. Im Bereich der Durchgangsöffnung 10 ist der Kernformkörper 13 auf einem konformen Stützzapfen 29 aufgenommen (Fig. 11). Nach dem Aushärten wird in der - gemäß Fig. 13 ersichtlichen - Kokille 25 das komplette Walzensegment 1 gebildet. Dieses kann nunmehr in einer überlagerten Schwenk-Schub-Bewegung R-R' (Fig. 14) aus der Kokille 25 entnommen werden.

Der vorbeschriebene Gießvorgang P kann beim Einfüllen des flüssigen Kunststoffs dadurch verbessert sein, dass in das System ein zusätzlicher Stabilisator (nicht dargestellt) eingebracht wird. Außerdem ist denkbar, dass an Stelle der einteilig dargestellten Gießkokille 25 eine mehrteilige, insbesondere geteilte Ausführung verwendet wird, so dass ggf. die Entformung (Pfeilrichtung R') vereinfacht wird, da in dieser Phase nur noch die inneren Profilierungen im Bereich der Kernform KF und des Stützzapfens 29 wirksam sind.

Eine weitere Variante der Verfahrensführung zum stoffschlüssigen Verbund der Lagen B und C sieht vor, dass der Mantelformkörper 15 mit dem Kernformkörper 13 auch durch einen zumindest bereichsweise erfolgenden Vulkanisiervorgang (nicht dargestellt) hergestellt werden kann.

In Fig. 15 ist eine teilweise geschnittene Ausführung eines veränderten Walzensegmentes 1' ähnlich Fig. 6 dargestellt, wobei dieses mit einer zweiteiligen Ausführung (ähnlich Fig. 11; Halbzeug H) im Bereich von Kernformkörpern 13, 13' versehen ist. Diese in der Innenstruktur des Walzensegmentes 1 zweiteilige Ausführung ist mit einem zentralen Verbindungssteg 28 geformt, der von dem eingegossenen Mantelprofilkörper 15 umfasst ist.

Aus einer Schnittdarstellung gemäß Fig. 16 wird - gemäß einer Schnittlinie A-A in Fig. 10 - die Gestalt des Kernformkörpers 13 im Bereich der inneren Profilstruktur verdeutlicht. Insbesondere ist aus der Darstellung ersichtlich, dass im Bereich eines dem Deckelteil zu entnehmenden Steges 30 die jeweiligen, von den Wandungen 23, 23' begrenzten Hohlräume 22' mit Wandabschnitten 30' verschlossen sind. Außerdem wird deutlich, dass der als Halbzeug H ebenfalls durch einen Gießvorgang geformte Kernformkörper 13 gemäß Fig. 16 mit geneigten Wandungsflächen (Winkel W, W') so geformt wird, dass dieses Bauteil aus der Gießform entsprechend leicht entnehmbar ist (nicht dargestellt).

## Patentansprüche

1. Trenn- und Reinigungsvorrichtung für einen Hackfruchternter o. dgl. Sortier- und Reinigungsanlagen der Landtechnik, der mit zumindest einer Trenn- und Reinigungsstrecke (4) versehen ist, in deren Bereich zumindest eine aus einem oder mehreren in Richtung einer Walzenlängsachse (A) koaxial aneinandergrenzenden Walzensegment(en) (1) zusammengesetzte Walze (2) angeordnet ist, wobei die Walzensegmente (1) mit einem aus elastisch nachgiebigem Material bestehenden sowie nach außen vorstehende Mitnahmerippen (7) aufweisenden Mantelteil (8) versehen sind und dieses radial innenseitig mit einem von Zwischenstegen begrenzbare Ausnehmungen (9) sowie eine Durchgangsöffnung (10) aufweisenden Aufnahmebereich zusammenwirkt, der seinerseits eine Mehrkantwelle o. dgl. Antriebselement (11) zur Drehmomentübertragung (D) aufnimmt, **dadurch gekennzeichnet, dass** die jeweiligen Walzensegmente (1) ausgehend von deren innerer Durchgangsöffnung (10) in radialer Richtung mit einer mehrlagigen Struktur versehen sind.

2. Vorrichtung nach Anspruch 1, **dadurch gekennzeichnet, dass** das Walzensegment (1) eine zweilagige metallfreie Struktur aufweist, die mit einer die Durchgangsöffnung (10) bildenden ersten Lage (B) und einer dieser radial als Mantelteil (8) zugeordneten zweiten Lage (C) versehen ist.

3. Vorrichtung nach Anspruch 1 oder 2, **dadurch gekennzeichnet, dass** die zumindest zwei Lagen (B, C) des Walzensegmentes (1) aus unterschiedlichem Material, insbesondere einem jeweiligen Kunststoff, bestehen und auf die den Aufnahmebereich ohne zusätzliche Tragmittel bildende innere Lage (C) des Zwei-Lagen-Segmentes das antreibende Drehmoment (D) unmittelbar übertragbar ist.

4. Vorrichtung nach einem der Ansprüche 1 bis 3, **dadurch gekennzeichnet, dass** das Walzensegment (1) im radialen Querschnitt mit einem zumindest ein umfangsseitig angeformtes Widerlagerprofil (12) aufweisenden Kernformkörper (13) und einem diesem im Bereich zumindest eines Gegenprofils (14) drehfest zugeordneten Mantelformkörper (15) die zweilagige Struktur (B, C) bildet.

5. Vorrichtung nach einem der Ansprüche 1 bis 4, **dadurch gekennzeichnet, dass** ausgehend von dem im Querschnitt des Walzensegmentes (1) als eine vergleichsweise formstabile Struktur wirksamen inneren Kernformkörper (13) der mit diesem eine Verbundeinheit bildende Mantelformkörper (15) so bemessen ist, dass dieser zumindest in radialer Richtung einen fertigungstechnisch in seinen Abmessungen variierbaren und zumindest bereichsweise aus elastischem Werkstoff bestehenden äußeren Funktionsbereich des Walzensegmentes (1) definiert.

6. Vorrichtung nach einem der Ansprüche 1 bis 5, **dadurch gekennzeichnet, dass** der Kernformkörper (13) als ein Halbzeug bereitstellbar ist und dieses mit dem zumindest bereichsweise zugeordneten Mantelformkörper (15) die aus zumindest zwei unterschiedlichen Werkstoffen aufgebaute Verbundeinheit (E) bildet, derart, dass der Mantelformkörper (15) als ein den Kernformkörper (13) in Umfangsrichtung vollflächig umgebender elastischer Hüllkörper ausgebildet ist.

7. Vorrichtung nach einem der Ansprüche 1 bis 6, **dadurch gekennzeichnet, dass** zwischen dem Kernformkörper (13) und dem Mantelformkörper (15) im Bereich der jeweiligen Widerlager- und Gegenprofile (12, 14) zumindest bereichsweise jeweilige stoff-, kraft- und/oder formschlüssige Verbindungszonen zur Herstellung der Verbundeinheit (E) vorgesehen sind.

8. Vorrichtung nach einem der Ansprüche 1 bis 7, **dadurch gekennzeichnet, dass** der Kernformkörper (13) und/oder der Mantelformkörper (15) ihrerseits jeweils aus mehreren Werkstoffen formbar sind/ist.

9. Vorrichtung nach einem der Ansprüche 1 bis 8, **dadurch gekennzeichnet, dass** der jeweilige Kernformkörper (13) aus einem Werkstoff gebildet ist, der in einer Relation von Werkstoffkennwerten zumindest eine größere Steifigkeit als der Mantelformkörper (15) bewirkt und dabei der Kernformkörper (13) insbesondere aus einem im Kostenvergleich preiswerteren Werkstoff herstellbar ist.

10. Vorrichtung nach einem der Ansprüche 1 bis 9, **dadurch gekennzeichnet, dass** die Verbundeinheit (E) einen aus thermoplastischem Kunststoff, duroplastischem Kunststoff und/oder glasfaserverstärktem Kunststoff bestehenden Kernformkörper (13) und einen zumindest bereichsweise aus weichelastischem Kunststoff oder Gummi geformten Mantelformkörper (15) aufweist, wobei dieser vorzugsweise aus Polyurethan (PUR), thermoplastischem Polyurethan (TPE; TPO, TPV, TPU, TPC) oder thermoplastischem Copolymer (TPS, TPA) besteht.

11. Vorrichtung nach einem der Ansprüche 1 bis 10, **dadurch gekennzeichnet, dass** das am Kernformkörper (13, 13') zumindest bereichsweise radial abragende Widerlagerprofil (12) mit einer zumindest bereichsweise konformen Aufnahmestruktur als Gegenprofil (14) am Mantelformkörper (15) zusammenwirkt, derart, dass das Widerlagerprofil (12) vorzugsweise nach Art eines Gewindeprofils mit einer Steigung (S, S') geformt ist und dieses in eine konform verlaufende Nutaufnahme (17) an der Innenseite des Mantelformkörpers (15) eingreift.

12. Vorrichtung nach Anspruch 11, **dadurch gekennzeichnet, dass** der Mantelformkörper (15) jeweilige, im Querschnitt an sich bekannte Freiräumen (F) bildende und von randseitigen Zwischenstegen (Z) begrenzte Deformationsstrukturen (9) aufweist, wobei jeweils in deren Bereich das Widerlagerprofil (12) und die Nutaufnahme (17) als Stützverbindung zusammenwirken.

13. Vorrichtung nach Anspruch 11 oder 12, **dadurch gekennzeichnet, dass** die in Längsrichtung des Mantelformkörpers (15) gewendelt verlaufenden Freiräume (F) eine oder mehrere Kanalstruktur(en) mit im Querschnitt eckigen und/oder runden Umgrenzungskonturen bilden.

14. Vorrichtung nach einem der Ansprüche 11 bis 13, **dadurch gekennzeichnet, dass** die am Kernformkörper (13) vorgesehenen Widerlagerprofile (12) jeweils als Streifenprofile (18) mit oberseitigem Erweiterungsansatz (19) geformt sind und das Streifenprofil (18) vorzugsweise mit Queröffnungen (20) versehen ist.

15. Vorrichtung nach einem der Ansprüche 11 bis 14, **dadurch gekennzeichnet, dass** der Kernformkörper (13, 13') ausgehend von seiner zentralen Durchgangsöffnung (10) mit einem einen diesen umgebenden Profilrahmen (21) aufweisenden Hohlprofil-Tragwerk geformt ist, wobei vom Profilrahmen (21) aus jeweilige Ansatzstreben (22) radial abragen, diese endseitig mit einem Hüllzylinderteil (23) verbunden sind und an dessen Außenumfang die gewendelten Streifenprofile (18) vorgesehen sind.

16. Vorrichtung nach einem der Ansprüche 11 bis 15, **dadurch gekennzeichnet, dass** jeweils zwei der Kernformkörper (13, 13") zur Umfassung durch einen Mantelformkörper (15') vorgesehen sind, wobei die Kernformkörper (13, 13') einerseits jeweils eine stirnseitige Anlagekontur mit axial und radial komplementären Profilbereichen (31, 31') aufweisen und andererseits ein jeweiliger Deckelteil (24) das Hohlprofil-Tragwerk bedeckt.

17. Vorrichtung nach einem der Ansprüche 1 bis 16, **dadurch gekennzeichnet, dass** der Kernformkörper (13, 13', 13") im Bereich der Durchgangsöffnung (10) mit einer diese zumindest bereichsweise auskleidenden Zusatzlage (KL) versehen ist.

18. Verfahren zur Herstellung eines für eine Trenn- und Reinigungsvorrichtung an Hackfruchterntern o. dgl. Anlagen der Landtechnik vorgesehenen und einen elastischen Mantelteil aufweisenden Walzensegmentes (1) gemäß einem der Ansprüche 1 bis 17, **dadurch gekennzeichnet, dass** ausgehend von einem als Kernformkörper (13) mit Widerlagerprofil (12) herstellbaren Halbzeug dieses mit einem zumindest bereichsweise den elastischen Mantelteil aufweisenden Mantelformkörper (15) zu einer zumindest zweilagigen Struktur (B, C) als Verbundeinheit (E) verbunden wird.

19. Verfahren nach Anspruch 18, **dadurch gekennzeichnet, dass** zum Aufbau der zweiteiligen Verbundeinheit (E) jeweilige Einzelteile mit zumindest zwei unterschiedlichen Materialeigenschaften verwendet werden, wobei der Mantelformkörper (15) auf dem Kernformkörper (13) durch eine einen kraft-, form- und/oder stoffschlüssigen Verbund bewirkende Verbindungstechnik festgelegt wird.

20. Verfahren nach Anspruch 18 oder 19, **dadurch gekennzeichnet, dass** der Kernformkörper (13) und der Mantelformkörper (15) als jeweilige komplementäre Verbindungsprofile aufweisende Halbzeuge bereitgestellt und der Verbund der beiden Lagen (B, C) zwischen zumindest einem Widerlagerprofil (12) am Kernformkörper (13) sowie einem Gegenprofil (14) am Mantelformkörper (15) hergestellt wird.

21. Verfahren nach Anspruch 18 oder 19, **dadurch gekennzeichnet, dass** der Mantelformkörper (15) durch einen den Kernformkörper (13) zumindest bereichsweise umfassenden Gießvorgang erzeugt und dabei gleichzeitig der stoffschlüssige Verbund zwischen den beiden Lagen (B, C) der Struktur hergestellt wird.

22. Verfahren nach Anspruch 21, **dadurch gekennzeichnet, dass** die zweilagige Struktur der Verbundeinheit (E) durch einen Spritzgießvorgang erzeugt wird.

23. Verfahren nach Anspruch 21, **dadurch gekennzeichnet, dass** die Walzensegmente (1) durch einen in einer Gießkokille (25) erfolgenden Gießvorgang (Pfeil X) erzeugt werden, derart, dass der Kernformkörper (13) in die Gießkokille (25) eingelegt wird, dabei für den Mantelformkörper (15) eine konturierte Formzone (27) frei bleibt, diese durch Einfüllen des flüssigen Kunststoffs verfüllt wird und nach einer Aushärtephase das zweiteilige Walzensegment (1) als Verbundeinheit (E) aus der Gießkokille (25) entnehmbar ist.

24. Verfahren nach Anspruch 23, **dadurch gekennzeichnet, dass** während des Gießvorgangs (Pfeil X) zumindest im Bereich des Kernformkörpers (13) ein insbesondere dessen Durchgangsöffnung (10) aussteifender Stabilisator eingebracht wird.

25. Verfahren nach Anspruch 24, **dadurch gekennzeichnet, dass** als die Gießkokille (25) eine mehrteilige Baugruppe verwendet wird.
